# EUROPÄISCHE PATENTSCHRIFT

(11) **EP 1 486 466 B1**
(45) Veröffentlichungstag und Bekanntmachung des Hinweises auf die Patenterteilung: **16.04.2008**
(21) Anmeldenummer: 04013756.4
(22) Anmeldetag: 11.06.2004
(51) Int. Cl.: C02F 11/06, C02F 11/02, C02F 11/00, C02F 3/32

(54) **Verfahren zur Vererdung von Faulschlämmen**
Process for transforming digested sludge into humus
Procédé de transformation en humus de boues digérées

(30) Priorität: 13.06.2003 DE 10326701
(43) Veröffentlichungstag der Anmeldung: 15.12.2004
(73) Patentinhaber: Pauly, Udo, Dr., 37249 Neu-Eichenberg (DE)
(72) Erfinder: Pauly, Udo, Dr., 37249 Neu-Eichenberg (DE); Rehfus, Stefan, 37085 Göttingen (DE)
(74) Vertreter: Rehberg Hüppe + Partner

(56) Entgegenhaltungen:
- EP-A- 1 167 303
- DE-A- 3 631 010
- DE-A- 10 010 109
- US-A- 5 078 882
- US-A- 5 320 663

## Beschreibung

Die Erfindung betrifft ein Verfahren zur Vererdung von Faulschlämmen mit den Merkmalen des Oberbegriffs des Patentanspruchs 1.

Unter Faulschlämmen im Sinne der vorliegenden Erfindung sind Rückstände von organischem Material aus anaeroben Verfahren zu verstehen, die insbesondere unter Faulung bzw. Gärung des organischen Materials mit einer Freisetzung von Methan oder anderen Biogasen arbeiten.

### STAND DER TECHNIK

In mechanisch-biologischen Kläranlagen entsteht im Belebtschlammprozess überschüssige Biomasse, die als Überschussschlamm dem Abwassereinigungsprozess entzogen wird. Überschussschlamm besteht zum überwiegenden Teil aus einem Konglomerat von aktivem und totem Zellmaterial von Mikroorganismen, aus organischen Feststoffen und adsorbierten organischen und anorganischen Abwasserinhaltsstoffen. Da der Überschussschlamm als Abfallprodukt der Kläranlage entsorgt werden muss, ist eine Volumenreduzierung des nassen Überschussschlamms mit typischen Trockensubstanzgehalten zwischen 1 und 5 % anzustreben, um die Entsorgungskosten zu verringern. Auf Kläranlagen wird der Überschussschlamm häufig zusammen mit Rohschlämmen aus der Vorklärung in Faultürme eingebracht, in denen die organische Substanz des Schlamms, die bis zu ca. 70 % der Trockensubstanz ausmacht, beispielsweise bei Temperaturen um 37 °C und Aufenthaltszeiten der Größenordnung 20 Tage in einem mesophilen Prozess um ca. 50 % abgebaut werden kann. Vorteil der Behandlung von Überschussschlamm in Faultürmen ist die Reduzierung der Klärschlammenge durch den Teilabbau der organischen Substanz. Zum anderen entsteht durch den Faulungsprozess Methan, das zur Energiegewinnung verwendet werden kann. Nachteil des Faulungsprozesses ist unter anderem, dass durch den teilweisen Abbau der organischen Trockensubstanz eine Freisetzung und Aufkonzentrierung der in der Biomasse enthaltenen Nähr- und Schadstoffe erfolgt. Die in dem ausgefaulten Überschussschlamm, im folgenden Faulschlamm genannt, enthaltenen organischen und anorganischen potentiell phytotoxischen Verbindungen sind gegenüber aerob behandelten Überschussschlämmen stark aufkonzentriert. Als nachgeschaltete Verfahren zur Behandlung von Faulschlämmen kommen sowohl maschinelle Entwässerungsverfahren als grundsätzlich auch das biologische Verfahren der Vererdung in einem Vererdungsbecken in Frage. Beim Einbringen von Faulschlämmen in herkömmliche Vererdungsbecken für Klärschlämme wurde jedoch häufig ein schädigender Einfluss der Faulschlämme auf die in den Vererdungsbecken eingesetzten Pflanzen, beispielsweise Schilf, festgestellt. Dieser schädigende Einfluss ist von der qualitativen Zusammensetzung der eingesetzten Faulschlämme abhängig und tritt teilweise erst nach mehreren Betriebsjahren der Vererdungsanlage auf. Er führt dann aber in der Regel zu deutlichen Ausfallerscheinungen im Pflanzenbestand. Um diesen Schädigungen vorzubeugen oder um sich bereits abzeichnende Schädigungen zu begrenzen oder wieder rückgängig zu machen, könnte die in ein Vererdungsbecken pro Zeit und Fläche eingebrachte Menge an Faulschlamm gegenüber den üblicherweise zur Anwendung kommenden Klärschlammmengen verringert werden. Dies kann jedoch bezogen auf die behandelbare Faulschlammmenge bei Neubauten insgesamt zu wirtschaftlich nicht vertretbaren Anlagegrößen mit entsprechend hohen Investitionsaufwendungen führen und bei bestehenden Anlagen die Wirtschaftlichkeit des Anlagenbetriebs in Frage stellen. Wegen der dargestellten Probleme und des damit verbundenen technischen und wirtschaftlichen Risikos wird die Vererdung von Faulschlämmen häufig nicht als gangbare Variante der Schlammentwässerung in Betracht gezogen, und es wird auf maschinelle Entwässerungsverfahren zurückgegriffen.

Ein Verfahren zur Vererdung von wässrigen Suspensionen organischer Stoffe mit den Merkmalen des Oberbegriffs des Patentanspruchs 1 ist aus der DE 197 26 128 C1 bekannt. Dieses Verfahren ist speziell zur Vererdung von Klärschlämmen vorgesehen. Als Besonderheit wird ein Leachmittel zugesetzt, um Schwermetalle aus der Trockensubstanz der in ein Vererdungsbecken eingebrachten Suspension herauszulösen. Das bekannte Verfahren ist auch für flüssige Gärrückstände aus einem Bioreaktor, in dem Biomüll unter Freisetzung von Methan vergoren wird, vorgesehen. Ein solcher Gärrückstand ist ein anaerob behandelter Faulschlamm im Sinne der vorliegenden Erfindung und übt dieselben schädigenden Einflüsse auf den Pflanzenbestand in dem eingesetzten Vererdungsbecken aus.

Ein Verfahren zur Vererdung von wässrigen Suspensionen organischer Stoffe mit den Merkmalen des Oberbegriffs des Patentanspruchs 1 ist auch aus der US-A-5,078 882 bekannt. Hier ist zur Behandlung von Schlämmen aus Abwasser ein Bioreaktor, bei dem es sich um einen Gärbehälter handeln kann, einem Vererdungsbecken vorgeschaltet. Die aus dem Bioreaktor in das Vererdungsbecken überführte wässrige Suspension wird in dem Vererdungsbecken mit Sauerstoff behandelt, indem beispielsweise Luft in das Vererdungsbecken eingeblasen wird.

### AUFGABE DER ERFINDUNG

Der Erfindung liegt die Aufgabe zugrunde, ein Verfahren zur Vererdung von Faulschlämmen aufzuzeigen, dessen Wirtschaftlichkeit nicht durch einen schädigenden Einfluss des Faulschlamms auf die in dem Vererdungsbecken einsetzten Pflanzen in Frage gestellt ist.

### LÖSUNG

Die Aufgabe der Erfindung wird erfindungsgemäß durch ein Verfahren mit den Merkmalen des Anspruchs 1 gelöst. Vorteilhafte Ausführungsformen des Verfahrens sind in den Unteransprüchen beschrieben. Ein allgemeinerer Aspekt der Erfindung wird durch den weiteren unabhängigen Patentanspruch 14 definiert.

### BESCHREIBUNG DER ERFINDUNG

Das neue Verfahren weist den zusätzlichen Schritt des Behandelns des anaerob stabilisierten Faulschlamms mit Sauerstoff auf. Eine Sauerstoffbehandlung ist bei Klärschlämmen, die aerob stabilisiert werden, nichts ungewöhnliches. Die Behandlung eines anaerob stabilisierten Faulschlamms mit Sauerstoff stellt jedoch an sich einen Widerspruch dar. Dennoch wird durch die Behandlung mit dem Sauerstoff der schädigende Einfluss des Faulschlamms auf die in einem Vererdungsbecken eingesetzten Pflanzen, beispielsweise Schilf, deutlich reduziert oder gar ganz aufgehoben. Die Behandlung des Faulschlamms mit Sauerstoff hat eine Oxidation reduzierter Verbindung in dem Faulschlamm zur Folge. Weiterhin wird die mikrobielle Lebensgemeinschaft in dem Faulschlamm zu aeroben Spezies hin verschoben. Darüber hinaus können durch den Sauerstoff im Faulschlamm gelöste Gase mit potentiell phytotoxischer Wirkung, wie beispielsweise CH_{4,} CO₂ und H₂S, aus dem Faulschlamm ausgetrieben werden. In der Konsequenz laufen im Wurzelraum der Klärschlammvererdungsanlage nur noch in verringertem Umfang anaerobe Prozesse mit potentiell pflanzenschädigender Wirkung ab. Damit reicht der Sauerstoffeintrag durch die Pflanzen, insbesondere das Wurzelwerk der Pflanzen, für die Restoxidation reduzierter

Verbindungen in dem Faulschlamm aus, ohne dass das Wurzelwerk aufgrund nachgelagerter Zehrungsprozesse durch reduzierte Inhaltsstoffe des Faulschlamms überfordert wird. Mit der Erfindung ist es also möglich, den Faulschlamm qualitativ so zu verbessern, dass er störungsfrei in üblichen Vererdungsbecken mit üblichem Pflanzenbestand bei wirtschaftlichem Durchsatz vererdet werden kann. Das mögliche Anwendungsspektrum von Klärschlammvererdungsanlagen wird hierdurch wesentlich erweitert. Dieser Vorteil ist als erheblich einzuschätzen, da nach einer repräsentativen Umfrage der ATV 1996 bei 53,1 % aller Kläranlagen in der Bundesrepublik Deutschland mit 85 % der Gesamtabwassermenge die anaerobe Klärschlammstabilisierung in Faultürmen zum Einsatz kam. Klärschlammvererdungsanlagen werden vorwiegend in Kläranlagen für weniger als 100.000 Einwohner eingesetzt. In diesen Kläranlagen werden 40 % der gesamten Abwassermenge in der Bundesrepublik Deutschland behandelt (Statistisches Bundesamt, 2002). Dabei erfolgt auf den meisten Kläranlagen für mehr als 20.000 Einwohner eine anaerobe Stabilisierung des Klärschlamms zu Faulschlamm. Das erfindungsgemäße Verfahren erweitert somit die Einsatzmöglichkeiten der Klärschlammverwerdung, die in wirtschaftlicher Form überwiegend auf aerob stabilisierte Klärschlämme beschränkt war, ganz erheblich. Auch andere Faulschlämme, beispielsweise Gärrückstände und Substrate aus Biogasanlagen oder sonstigen anaeroben Verfahren sind mit dem neuen Verfahren problemlos vererdbar.

Bei dem neuen Verfahren wird der Faulschlamm vor dem Einleiten in das Vererdungsbecken mit Sauerstoff behandelt werden. Der unbehandelte Faulschlamm kommt so mit den Pflanzen in dem Vererdungsbecken überhaupt nicht in Berührung.

Zur Behandlung des anaerob stabilisierten Faulschlamms mit Sauerstoff kann gasförmiger Sauerstoff in den Faulschlamm eingebracht werden. Damit wird der Eintrag zusätzlicher chemischer Substanzen in dem Faulschlamm vermieden. Außerdem kann das Austreiben im Faulschlamm gelöster Gase mit potentiell phytotoxischer Wirkung, das auch als Strippen dieser Gase bezeichnet wird, durch den Einsatz von gasförmigem Sauerstoff besonders unterstützt werden. Das Strippen der im Faulschlamm gelösten Gase insbesondere bereits vor dem Einleiten des Faulschlamms in das Vererdungsbecken, kann auch mit inerten Gasen erfolgen, beispielsweise mit Stickstoff. Das Strippen der im Faulschlamm gelösten unerwünschten Gase mit einem inerten oder erwünschten Gas ist eine grundsätzlich vorteilhafte Maßnahme zur Behandlung von Faulschlämmen vor deren Vererdung.

Um das Lösen des gasförmigen Sauerstoffs in dem Faulschlamm zu begünstigen, sollte eine Kontaktfläche zwischen dem Faulschlamm und dem gasförmigen Sauerstoff durch Ausziehen des Faulschlamms vergrößert werden. Dies kann dadurch erreicht werden, dass der Faulschlamm durch einen Tropfkörper geführt wird. Ein solcher Tropfkörper kann mit Kunststoffkörpern oder ähnlich geeignetem Trägermaterial für den Aufwuchs von Mikroorganismen gefüllt sein, so dass nicht nur der Faulschlamm ausgezogen wird, um seine Oberfläche zu vergrößern, sondern auch gute Voraussetzungen für die Ausbildung einer günstigen Mikroorganismengemeinschaft geschaffen sind. Derartige Tropfkörper sind auf vielen Kläranlagen noch von früher angewandten Verfahren zur Abwasserreinigung vorhanden.

Der gasförmige Sauerstoff kann aber auch in den Faulschlamm eingeblasen werden, wodurch die Oberflächenvergrößerung durch die Oberfläche der Sauerstoffblasen in dem Faulschlamm gegeben ist. Das Einblasen des Sauerstoffs kann direkt in eine Zuleitung für den Faulschlamm zu dem Vererdungsbecken erfolgen. Bevorzugt ist es jedoch, wenn das Einblasen des Sauerstoffs in einer Schlammvorlage, d.h. in einem größeren vorgeschalteten Behälter erfolgt. In jedem Fall kann der Sauerstoff in Form von Druckluft, technischem Sauerstoff oder innerhalb eines Gasgemisches mit einem Inertgas eingesetzt werden.

Eine besonders große Aufnahme von Sauerstoff in den Faulschlamm kann dadurch erreicht werden, dass der Faulschlamm in dem gasförmigen Sauerstoff dispergiert wird. Es sind verschiedenste technische Einrichtungen bekannt, um flüssige und auch schlammförmige Substanzen in Gasen zu dispergieren, um so die Gasaufnahme in die Flüssigkeit bzw. den Schlamm zu unterstützen. Zu den bekannten Maßnahmen gehört der Einsatz von Prallplatten, offener oder geschlossener Kaskaden, Turmverdüsung, Wellbahnenkolonnen, Dispergatoren usw.

Die Löslichkeit des Sauerstoffs in dem Faulschlamm kann auch dadurch erhöht werden, dass der Faulschlamm vor oder während des Einbringens des gasförmigen Sauerstoffs gekühlt wird. Diese Maßnahme ist auch dadurch umsetzbar, dass der Eintrag des Sauerstoffs in den Faulschlamm dann erfolgt, wenn der Faulschlamm, beispielsweise in den frühen Morgenstunden, eine im Vergleich zu dem Rest des Tages vergleichsweise niedrige Temperatur aufweist.

Der anaerob stabilisierte Faulschlamm kann statt mit molekularem Sauerstoff auch mit einem Oxidationsmittel behandelt werden. Dieses Oxidationsmittel kann gasförmig oder auch eine Flüssigkeit oder ein Feststoff sein, die bzw. der in den Faulschlamm eingemischt wird. Häufig bedeutet der Einsatz eines Oxidationsmittels jedoch eine Verschlechterung der Wirtschaftlichkeit des neuen Verfahrens und/oder den ungewollten Eintrag zusätzlicher chemischer Substanzen in den Faulschlamm.

Der anaerob stabilisierte Faulschlamm kann zusätzlich auch in dem Vererdungsbecken mit Sauerstoff behandelt werden. Hierzu ist zumindest ein Teil der bislang beschriebenen Maßnahmen für das Einbringen von Sauerstoff in den Faulschlamm ebenfalls geeignet.

Speziell auf die Behandlung des Faulschlamms mit Sauerstoff in dem Vererdungsbecken ist die Maßnahme abgestimmt, die Pflanzsubstratschicht passiv und/oder aktiv mit gasförmigem Sauerstoff zu beaufschlagen. D.h. es wird zusätzlich zu dem Eintrag von Luftsauerstoff über das Wurzelwerk der Pflanzen gasförmiger Sauerstoff in die Pflanzsubstratschicht eingebracht. Hierzu kann es ausreichen, Belüftungskanäle in der Pflanzsubstratschicht bereitzustellen, die passiv mit Luft durchströmt werden. Bevorzugt ist es jedoch, wenn aktiv gasförmiger Sauerstoff, insbesondere Luft durch künstliche Belüftungskanäle in die Pflanzsubstratschicht eingeblasen wird. Diese Belüftungskanäle können auch zum Abführen potentiell phytotoxischer Gase aus der Pflanzsubstratschicht genutzt werden. Die Pflanzsubstratschicht kann bei dem neuen Verfahren grundsätzlich unterschiedliche Zusammensetzungen aufweisen und beispielsweise überwiegend organische oder anorganische Bestandteile umfassen. Die Pflanzsubstratschicht bzw. ein sie ausbildendes Pflanzsubstrat ist nur durch die Eignung definiert, die Pflanzen, also beispielsweise Schilf, dort hinein einzupflanzen. Sie kann demnach auch aus einer Schicht von abgetrocknetem Schlamm bestehen, der direkt auf die Dränageschicht in das Vererdungsbecken eingebracht wurde.

Bevorzugt ist es jedoch, wenn die Pflanzsubstratschicht durch die Zusammensetzung des Pflanzsubstrats so mit vernetzten Hohlräumen versehen wird, dass sich der gasförmige Sauerstoff im Bereiche des Wurzelwerks der Pflanzen verteilt Als wichtiges Kriterium für eine erfolgreiche Behandlung mit dem Sauerstoff hat sich die Absenkung des Gehalts des Faulschlamms an Ammonium-Stickstoff herausgestellt. Konkret sollte der Gehalt des Faulschlamms an Ammonium-Stickstoff um mehr als 50 % durch die Behandlung mit dem Sauerstoff abgesenkt werden. Bevorzugt ist eine Absenkung um mehr als 75 %.

Die für die Behandlung von Faulschlämmen einzusetzenden Mengen an Sauerstoff richten sich neben dem Trockensubstanzgehalt des Faulschlamms nach dessen konkreter Zusammensetzung. Als Anhaltspunkt für die einzusetzende Menge an Sauerstoff kann die Forderung gesehen werden, dass sie größer als das 0,1-fache der Trockensubstanz und größer als das 3-fache des Gehalts an Ammonium-Stickstoff des Faulschlamms ist. Wenn statt reinem Sauerstoff Luft eingesetzt wird, ist die Menge des eingesetzten Gases zu erhöhen, wobei jedoch der beispielsweise bei Luft fehlende Sauerstoffgehalt nicht vollständig kompensiert werden muss, da auch die anderen Bestandteile der Luft positive Auswirkung auf dem Faulschlamm aufweisen (s.o.).

Außerdem kann der pH-Wert des Faulschlamm zur Entfernung von Ammonium-Stickstoff aus dem Faulschlamm, auf über 8,0 eingestellt werden Bei einem pH-Wert oberhalb von 8 bis 9 entsteht aus Ammonium-Stickstoff in quantitativen Mengen flüchtiges Ammoniak, das auch ohne Oxidation oder Begasung des Faulschlamms ausgestrippt werden kann.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Schnitt durch ein Vererdungsbecken.
- **Fig. 2**: zeigt einen Schnitt durch einen Vorlagebehälter, in dem eine Belüftung von Faulschlamm erfolgt und
- **Fig. 3**: zeigt eine Ansicht des Vorlagebehälters gemäß Fig. 2 von oben.

### FIGURENBESCHREIBUNG

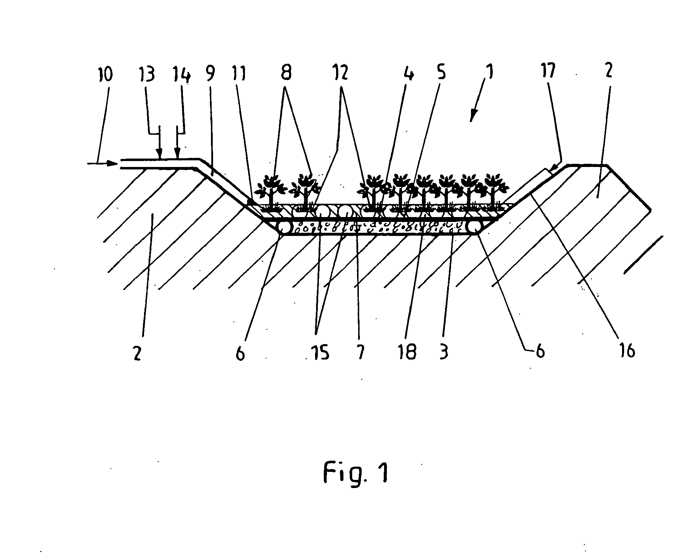

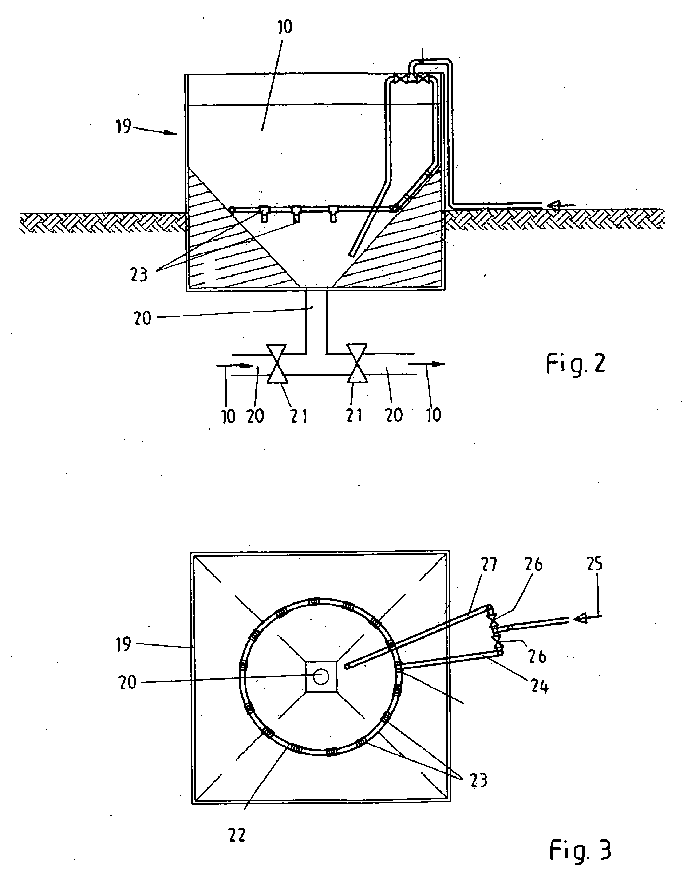

**Fig. 1** zeigt einen Schnitt durch ein Vererdungsbecken 1, dessen seitliche Abmessungen durch Wälle 2 definiert ist. Über einer wasserundurchlässigen Schicht 3 ist zunächst am Grund des Vererdungsbeckens eine Dränageschicht 4 vorgesehen, die typischerweise aus Dränageschotter oder -kies 5 besteht. In der Dränageschicht 4 sind Dränageleitungen 6 zum Ableiten von Filtrat vorgesehen, das durch die höher gelegenen Schichten in dem Vererdungsbecken 1 hindurchtritt. Über der Dränageschicht 4 ist eine Pflanzsubstratschicht 7 angeordnet, in die Pflanzen 8 eingepflanzt sind. Die Pflanzsubstratschicht 7 kann durch Aufbringen eines speziellen Pflanzsubstrats 18 ausgebildet werden, wobei die Zusammensetzung des Pflanzsubstrats 18 zur Optimierung der Funktion des Vererdungsbeckens 1 ausgewählt werden kann. Die Pflanzsubstratschicht 7 kann aber beispielsweise auch aus einer ersten abgetrockneten Schicht von in das Vererdungsbecken eingebrachtem Schlamm bestehen. Die Pflanzen 8 sind danach ausgewählt, dass sie zur Klärschlammvererdung geeignet sind. Zu derartigen Pflanzen zählt insbesondere Schilf. Über eine Zuführleitung 9 wird anaerob stabilisierter Faulschlamm 10 in das Vererdungsbecken 1 oberhalb der Pflanzsubstratschicht 7 eingeleitet, wobei der Faulschlamm 10 durch seitliche Austrittsöffnungen 11 aus der Zuführleitung 9 austritt. Um die grundsätzliche Gefahr einer Schädigung insbesondere des Wurzelwerks 12 der Pflanzen 8 durch den Faulschlamm 10 wesentlich zu reduzieren, wird der Faulschlamm 10 gemäß der vorliegenden Erfindung mit Sauerstoff behandelt. Hierzu sind in Fig. 1 verschiedene Maßnahmen angedeutet. So kann der Faulschlamm vor der Einleitung in das Vererdungsbecken 1 mit Oxidationsmitteln 13 versetzt werden. Dies kann in der Zuführleitung 9 aber auch in einem vorgeschalteten Vorlagebehälter erfolgen. Ebenso kann gasförmiger Sauerstoff 14 in den Faulschlamm 10 eingeblasen werden. Auch dies kann in der Zuführleitung 9 oder in einem vorgeschalteten Vorlagebehälter erfolgen, worauf im Zusammenhang mit den Fig. 2 und 3 noch näher eingegangen werden wird. Bei den Oxidationsmitteln kann es sich beispielsweise um KMnO₄, O₃, H₂O₂ und dgl. handeln. Der gasförmige Sauerstoff 14 kann in Form von Druckluft, technischem Sauerstoff oder Gemischen von Sauerstoff mit anderen Gasen eingesetzt werden. In dem Vererdungsbecken 1 kann ebenfalls eine Behandlung des Faulschlamms 10 mit Sauerstoff erfolgen. Hierzu ist angedeutet, dass Belüftungsrohre 15 in die Pflanzsubstratschicht 7 eingebettet sind, die mit einer Zuführleitung 16 für Luft 17 verbunden sind. Dabei kann die Luft 17 über ein Gebläse in die Zuführleitung 16 und die mit ihr verbundenen Belüftungsrohre 15 eingeblasen werden. Die Luft 17 tritt durch Durchbrechungen in den Belüftungsrohren 15 in die Pflanzsubstratschicht 7 über. Gleichzeitig können Gase aus dem Faulschlamm 10 in die Belüftungsrohre 15 eintreten und über diese abgeführt werden. Die Belüftungsrohre 15 können auch gitterförmig verlegt sein. Bevorzugt ist es, wenn auch ein Pflanzsubstrat 18, das die Pflanzsubstratschicht 7 ausbildet, in seiner Zusammensetzung für eine Belüftung der Pflanzsubstratschicht zum Zwecke der Behandlung des Faulschlamms 10 mit Sauerstoff optimiert ist. Zu diesem Zweck können ihm beispielsweise grobe Strukturträgermaterialien in Form von Holzhäckseln oder dgl. beigemischt sein.

Für die Behandlung des Faulschlamms 10 mit Sauerstoff vor seinem Einleiten in das Vererdungsbecken 1 können beispielsweise solche Techniken verwandt werden, wie sie bei der Belüftung von Abwasser und Klärschlämmen grundsätzlich bekannt sind. Im Stand der Technik wird die Belüftung jedoch dazu eingesetzt, die Klärschlämme aerob zu stabilisieren. Die mit dem neuen Verfahren vererdeten Faulschlämme sind hingegen bereits zuvor anaerob stabilisiert worden. So kann der Faulschlamm vor seinem Einleiten in das Vererdungsbecken 1 gemäß Fig. 1 über einen mit Kunststoffkörpern oder ähnlich geeigneten Trägermaterialien für den Aufwuchs von Mikroorganismen gefüllten Tropfkörper geleitet werden. Der Faulschlamm wird auf die Oberfläche der Kunststofffüllkörper geleitet und durchrieselt den Tropfkörper vertikal unter dem Einfluss seiner Schwerkraft. Durch den in der vorangegangenen Faulung bereits weitgehend erfolgten Abbau der organischen Substanz kann sich im Tropfkörper eine für die Nitrifikation spezialisierte Mikroorganismengemeinschaft ausbilden, da der Konkurrenzdruck durch heterotrophe Mikroorganismen stark eingeschränkt ist. Die Nitrifikation wird durch eine hohe Temperatur im Faulschlamm von über 30 °C, die die Reaktionskinetik verbessert, unterstützt. Ebenfalls temperaturbedingt entsteht eine aufwärts gerichtete, der Fließrichtung des Faulschlamms entgegengerichtete Luftströmung im Tropfkörper, wodurch die Nitrifikation unter Ausnutzung des resultierenden Sauerstoffgradienten ebenfalls gefördert wird. Die verbleibenden Konzentrationen des so behandelten Faulschlamms an Ammonium-Stickstoff und anderen reduzierten Verbindungen entsprechen denen aerob stabilisierter Überschussschlämme. So ist zum einen eine wesentliche Verbesserung der Schlammqualität in Bezug auf die Pflanzenverträglichkeit für den Vererdungsprozess in dem Vererdungsbecken auszugehen. Zum anderen wird die Rückbelastung der Kläranlage durch die Filtratwässer der Schlammentwässerung in dem Vererdungsbecken hinsichtlich Ammonium-Stickstoff wesentlich reduziert. Auf vielen Kläranlagen sind von früher eingesetzten Abwasserreinigungsvorrichtungen alte, nicht mehr genutzte Tropfkörper vorhanden. In der Regel ist die für die Abwasserreinigung erforderliche Kapazität um einen Faktor 3 bis 4 größer als für die hier beschriebene Behandlung von Faulschlämmen, so dass vorhandene Kapazitäten ohne bauliche Erweiterungen benutzt werden können. Die Bemessung des Tropfkörpers für die Behandlung von Faulschlämmen kann klassischen Ansätzen folgen, die für die Bemessung von Tropfkörpern für die Abwasserreinigung bekannt sind. Konkret kann die Bemessung in Bezug auf den Gehalt an Ammonium-Stickstoff an dem Faulschlamm vorgenommen werden. Bei einer täglichen Belastung von 1 m³ Tropfkörpervolumen mit weniger als 0,2 kg Ammonium-Stickstoff im Faulschlamm erweist sich eine Flächenbeschickung von 0,4 bis 0,8 m³ pro Tropfkörperoberfläche in m² und Stunde als geeignet.

Es können auch solche Aggregate zum Behandeln des Faulschlamms mit Sauerstoff vor dem Einleiten in das Vererdungsbecken eingesetzt werden, die zur Förderung des Gasaustausches bei der Aufbereitung von Rohwasser oder Trinkwasser zum Zwecke der Entsäuerung bekannt sind. Diese Aggregate basieren beispielsweise auf Prallplatten, offenen oder geschlossenen Kaskaden, Turmverdüsung, Wellenbahnkolonnen, Dispergatoren usw.

Eine weitere konkrete Maßnahme zur Behandlung von Faulschlamm mit Sauerstoff vor dem Einleiten in das Vererdungsbecken 1 gemäß Fig. 1 ist in den Fig. 2 und 3 skizziert. Es handelt sich um einen Vorlagebehälter 19, der zur Aufnahme von Faulschlamm vorgesehen ist und dazu mit Rohrleitungen 20 verbunden ist, in denen Ventile 21 angeordnet sind. In dem Vorlagebehälter 19 ist eine ringförmige Einblasleitung 22 vorgesehen, an der nach unten gerichtete Ausblasdüsen 23 angeordnet sind. Die Einblasleitung 22 ist mit einer Zuführleitung 24 für Druckluft 25 von einem Gebläse verbunden. Ventile 26 ermöglichen die Verteilung der Druckluft 25 auf die Zuführleitung 24 und eine weitere Einblasleitung 27. Die Ausblasdüsen 23 sind so dimensioniert, dass die ausgeblasene Druckluft mit einem Blasendurchmesser von 10 bis 20 mm in den Faulschlamm 10 einströmt. Die ausströmende Druckluft 25 bewirkt auch eine Umwälzung des Faulschlamms in dem Vorlagebehälter 19.

Die Menge an Sauerstoff, die in den Faulschlamm zu seiner Behandlung eingebracht werden sollte, hängt von dem Trockensubstanzanteil des Faulschlamms und spezieller von dessen Zusammensetzung ab. Hierbei spielt insbesondere der Gehalt an Ammonium-Stickstoff eine Rolle. Es hat sich als günstig erwiesen, die eingesetzte Sauerstoffmenge nach zwei Kriterien festzulegen. Zum einen soll die Sauerstoffmenge mehr als das 0,1-fache der Trockensubstanz des Faulschlamms betragen. Bevorzugt ist es, wenn die Sauerstoffmenge das 0,2-fache der Trockensubstanz erreicht. Zum anderen soll die Sauerstoffmenge größer als das 3-fache des Gehalts an Ammonium-Stickstoff des Faulschlamms sein. Bevorzugt ist es hier, wenn hier das 4,6-fache erreicht wird. Wenn statt reinem Sauerstoff Luft eingesetzt wird, muss die eingesetzte Gasmenge nicht so weit erhöht werden, dass die Fehlmenge an Sauerstoff vollständig ausgeglichen wird, da auch die anderen Bestandteile der Luft einen positiven Einfluss auf den Faulschlamm haben.

### BEZUGSZEICHENLISTE

- 1: Vererdungsbecken
- 2: Wall
- 3: Schicht
- 4: Dränageschicht
- 5: Dränagekies
- 6: Dränageleitung
- 7: Pflanzsubstratschicht
- 8: Pflanze
- 9: Zuleitung
- 10: Faulschlamm
- 11: Austrittsöffnung
- 12: Wurzelwerk
- 13: Oxidiermittel
- 14: gasförmiger Sauerstoff
- 15: Belüftungsrohr
- 16: Zuleitung
- 17: Luft
- 18: Pflanzsubstrat
- 19: Vorlagebehälter
- 20: Rohrleitung
- 21: Ventil
- 22: Einblasleitung
- 23: Ausblasdüse
- 24: Zuleitung
- 25: Druckluft
- 26: Ventil
- 27: Einblasleitung

## Patentansprüche

1. Verfahren zur Vererdung von Faulschlämmen, mit den Schritten:
- Anordnen einer Dränageschicht in einem Vererdungsbecken;
- Aufbringen einer Pflanzsubstratschicht auf die Dränageschicht;
- Einpflanzen von Pflanzen in die Pflanzsubstratschicht und
- wiederholtes Einleiten von Faulschlamm in das Vererdungsbecken oberhalb der Pflanzsubstratschicht;
**gekennzeichnet durch** den zusätzlichen Schritt:
- Behandeln des anaerob stabilisierten Faulschlamm (10) vor dem Einleiten in das Vererdungsbecken (1) mit Sauerstoff.

2. Verfahren nach Anspruch 1, **dadurch gekennzeichnet, dass** gasförmiger Sauerstoff (14) in den Faulschlamm eingebracht wird.

3. Verfahren nach Anspruch 2, **dadurch gekennzeichnet, dass** eine Kontaktfläche zwischen dem Faulschlamm (10) und dem gasförmigen Sauerstoff (14) durch Ausziehen des Faulschlamms (10) vergrößert wird.

4. Verfahren nach Anspruch 2, **dadurch gekennzeichnet, dass** der gasförmige Sauerstoff (14) in den Faulschlamm (10) eingeblasen wird.

5. Verfahren nach Anspruch 2, **dadurch gekennzeichnet, dass** der Faulschlamm (10) in dem gasförmigen Sauerstoff (14) dispergiert wird

6. Verfahren nach einem der Ansprüche 2 bis 5, **dadurch gekennzeichnet, dass** der gasförmige Sauerstoff (14) in Form eines Gasgemisches, insbesondere unter Zusatz von inerten Gasen, oder in Form von Luft, insbesondere Druckluft (25) eingesetzt wird.

7. Verfahren nach einem der Ansprüche 2 bis 6, **dadurch gekennzeichnet, dass** der Faulschlamm (10) vor oder gleichzeitig mit dem Einbringen des gasförmigen Sauerstoffs (14) gekühlt wird.

8. Verfahren nach einem der Ansprüche 1 und 2, **dadurch gekennzeichnet, dass** der anaerob stabilisierte Faulschlamm (10) mit einem Oxidationsmittel (13) behandelt wird.

9. Verfahren nach Anspruch 1, **dadurch gekennzeichnet, dass** der anaerob stabilisierte Faulschlamm (10) in dem Vererdungsbecken mit Sauerstoff behandelt wird.

10. Verfahren nach Anspruch 9, **dadurch gekennzeichnet, dass** die Pflanzsubstratschicht (7) passiv und/oder aktiv mit gasförmigem Sauerstoff beaufschlagt, insbesondere belüftet, wird

11. Verfahren nach Anspruch 10, **dadurch gekennzeichnet, dass** die Pflanzsubstratschicht (7) so mit vernetzten Hohlräumen versehen wird, dass sich der gasförmige Sauerstoff im Bereiche des Wurzelwerks (12) der Pflanzen (8) verteilt.

12. Verfahren nach einem der Ansprüche 1 bis 11, **dadurch gekennzeichnet, dass** durch die Behandlung mit dem Sauerstoff ein Gehalt des Faulschlamms (10) an Ammonium-Stickstoff um mehr als 50 %, vorzugsweise um mehr als 75 % reduziert wird

13. Verfahren nach einem der Ansprüche 1 bis 12, **dadurch gekennzeichnet, dass** der Sauerstoff in einer Menge eingesetzt wird, die größer als das 0,1-fache der Trockensubstanz und größer als das 3-fache des Gehalts an Ammonium-Stickstoff des Faulschlamms (10) ist.

14. Verfahren nach einem der Ansprüche 1 bis 13, **dadurch gekennzeichnet, dass** der pH-Wert des Faulschlamm (10) auf über 8,0 eingestellt wird.

## Claims

1. A method of transforming digested sludge into humus, comprising the steps of:
- arranging a drainage layer in a transformation into humus basin;
- superimposing the drainage layer with a plant substratum;
- planting plants into the plant substratum layer, and
- repeatedly discharging digested sludge into the transformation into humus basin above the plant substratum layer;
**characterized by** the additional step of:
- treating the anaerobically stabilized digested sludge (10) with oxygen prior to discharging it in the transformation into humus basin (1).

2. The method of claim 1, **characterized in that** gaseous oxygen (14) is introduced into the digested sludge.

3. The method of claim 2, **characterized in that** a contact area between the digested sludge (10) and the gaseous oxygen (14) is increased by spreading the digested sludge (10).

4. The method of claim 2, **characterized in that** the gaseous oxygen (14) is blown in the digested sludge (10).

5. The method of claim 2, **characterized in that** the digested sludge (10) is dispersed in the gaseous oxygen (14).

6. The method of any of the claims 2 to 5, **characterized in that** the gaseous oxygen (14) is used in form of a gas mixture, particularly with the addition of inert gases, or in form of air, particularly of pressurized air (25).

7. The method of any of the claims 2 to 6, **characterized in that** the digested sludge (10) is cooled prior to or simultaneously with introducing the gaseous oxygen (14).

8. The method of any of the claims 1 and 2, **characterized in that** the anaerobically stabilized digested sludge (10) is treated with an oxidant (13).

9. The method of claim 1, **characterized in that** the anaerobically stabilized digested sludge (10) is treated with oxygen in the transformation into humus basin.

10. The method of claim 9, **characterized in that** the plant substratum layer (7) is passively and/or actively subjected to gaseous oxygen (14), particularly aerated.

11. The method of claim 10, **characterized in that** the plant substratum layer (7) is provided with interconnected cavities in such a way, that the gaseous oxygen distributes in the area of the root system (12) of the plants (8).

12. The method of any of the claims 1 to 11, **characterized in that** an ammonium-nitrogen content of the digested sludge (10) is reduced by more than 50 %, preferably by more than 75 %, by means of the treatment with the oxygen.

13. The method of any of the claims 1 to 12, **characterized in that** the oxygen is used in an amount which is more than the 0.1-fold dry matter and more than the 3-fold ammonium-nitrogen content of the digested sludge (10).

14. The method of any of the claims 1 to 13, **characterized in that** the pH of the digested sludge (10) is adjusted above 8.0.

## Revendications

1. Procédé de transformation de boues digérées en humus, comprenant les étapes consistant à :
- mettre en place une couche de drainage dans un bassin d'humification ;
- déposer une couche de substrat de plantation sur la couche de drainage ;
- planter des végétaux dans la couche de substrat de plantation ; et
- introduire de manière répétée de la boue digérée dans le bassin d'humification par dessus la couche de substrat de plantation ;
**caractérisé par** l'étape additionnelle consistant à :
- traiter la boue digérée stabilisée en conditions anaérobies (10) avec de l'oxygène avant de l'introduire dans le bassin d'humification (1).

2. Procédé selon la revendication 1, **caractérisé en ce que** de l'oxygène gaz (14) est introduit dans la boue digérée.

3. Procédé selon la revendication 2, **caractérisé en ce qu'**une surface de contact entre la boue digérée (10) et l'oxygène gaz (14) est agrandie par étirage de la boue digérée (10).

4. Procédé selon la revendication 2, **caractérisé en ce que** l'oxygène gaz (14) est insufflé dans la boue digérée (10).

5. Procédé selon la revendication 2, **caractérisé en ce que** la boue digérée (10) est dispersée dans l'oxygène gaz (14).

6. Procédé selon l'une des revendications 2 à 5, **caractérisé en ce que** l'oxygène gaz (14) est utilisé sous la forme d'un mélange gazeux, en particulier en y ajoutant des gaz inertes, ou sous la forme d'air, en particulier d'air comprimé (25).

7. Procédé selon l'une des revendications 2 à 6, **caractérisé en ce que** la boue digérée (10) est refroidie avant ou en même temps que l'introduction de l'oxygène gaz (14).

8. Procédé selon l'une des revendications 1 et 2, **caractérisé en ce que** la boue digérée stabilisée en conditions anaérobies (10) est traitée avec un agent oxydant (13).

9. Procédé selon la revendication 1, **caractérisé en ce que** la boue digérée stabilisée en conditions anaérobies (10) est traitée à l'oxygène dans le bassin d'humification.

10. Procédé selon la revendication 9, **caractérisé en ce que** la couche de substrat de plantation (7) est exposée de manière passive et/ou active à de l'oxygène gaz, en particulier aérée.

11. Procédé selon la revendication 10, **caractérisé en ce que** la couche de substrat de plantation (7) est dotée de cavités interconnectées de telle façon que l'oxygène gaz se répartit dans des zones du système racinaire (12) des végétaux (8).

12. Procédé selon l'une des revendications 1 à 11, **caractérisé en ce que** le traitement à l'oxygène permet de réduire de plus de 50%, de préférence de plus de 75%, la teneur en azote d'ammonium de la boue digérée (10).

13. Procédé selon l'une des revendications 1 à 12, **caractérisé en ce que** l'oxygène est utilisé en une quantité supérieure à 0,1 fois la matière sèche et supérieure à 3 fois la teneur en azote d'ammonium de la boue digérée (10).

14. Procédé selon l'une des revendications 1 à 13, **caractérisé en ce que** le pH de la boue digérée (10) est ajusté à une valeur supérieure à 8,0.
